# EUROPEAN PATENT APPLICATION

(11) **EP 4 472 010 A2**
(43) Date of publication of application: **04.12.2024**
(21) Application number: 24179304.1
(22) Date of filing: 31.05.2024
(51) Int. Cl.: H02J 3/38, G06Q 10/04, G06Q 10/06

(54) **METHOD AND APPARATUS FOR DEMAND MANAGEMENT ON AN ELECTRICAL GRID**

(30) Priority: 01.06.2023 US 202318327886
(71) Applicant: WindEverest Corp., Houston, TX 77345 (US)
(72) Inventor: ROLNIK, Robert, Kingwood (US)
(74) Representative: Barker Brettell LLP

(57) **Abstract**

This invention describes a power management system that may receive a total wind power forecast that can be provided to an electric grid that supplies power to a load. A power management system may receive a first total load forecast for the electric grid corresponding to a load. A power management system may classify time periods with a first characterization based on a relationship between the total wind power forecast and the first total load forecast. A power management system may transmit the first characterization with a corresponding period for the first characterization to a subscriber thereby allowing a subscriber to determine timing of power consumption based on a load plan. A power management system may receive the load plan from the subscriber, wherein each load plan includes a planned electricity consumption from the electric grid and at least one of the plurality of periods.

## Description

### TECHNICAL FIELD

The present technology relates generally to a computer implemented method, data processing system, and computer program product for reporting electrical grid conditions. More specifically, the present invention relates to weather reporting and other predicted environmental conditions for load access to energy generated by renewable resources.

### BACKGROUND

Currently, power grid systems deliver electricity to a consumer. In particular, variable wind resources such as wind farms utilize one or more wind turbines, which range from a kilowatt to several megawatts (MW) in capacity and are configured to convert wind energy into electricity. Variable resources generate a MW power output having a range of values through a period of time. Thus, it may be more desirable for a user to be notified when a higher MW power output is available in an attempt to access electricity at a lower cost during use. For example, a user charging an electric vehicle at a high demand time of day, such as in the afternoon when a user may be out of work and during a time having a low wind forecast may pay a higher cost for the electricity compared to a user charging an electric vehicle at a low demand time of day, such as around midnight when a user may be sleeping and during a time having a high wind forecast. There is a long felt, yet unfulfilled need for a user to have the ability to assess environmental conditions and electricity consumption demands as they relate to electricity availability and cost when determining when to consume electricity, for example, when charging an electronic vehicle.

Such a system may also manage the consumption of electricity to avoid overwhelming the power grid. For example, a power grid overload may result in an overall collapse of the power grid system if an unexpected surge in demand for electricity rises to a level that cannot be supported by the power grid. Thus, there is a need to allocate the demand for electricity to ensure a power grid can successfully operate within ideal operating parameters.

Accordingly, there remains a need for an improved demand management based on response and feedback, all which are associated with an electrical grid. This need and other needs are satisfied by the various aspects of the present disclosure.

### SUMMARY

In accordance with the principles of the present invention, a power management system that may receive a total wind power forecast that can be provided to an electric grid that supplies power to a load. A power management system may receive a first total load forecast for the electric grid corresponding to a load. A power management system may classify time periods with a first characterization based on a relationship between the total wind power forecast and the first total load forecast. A power management system may transmit the first characterization with a corresponding period for the first characterization to a subscriber thereby allowing a subscriber to determine timing of power consumption based on a load plan. A power management system may receive the load plan from the subscriber, wherein each load plan includes a planned electricity consumption from the electric grid and at least one of the plurality of periods, and which also includes improvements that overcome the limitations of prior power management systems, is now met by a new, useful, and non-obvious invention.

### BRIEF DESCRIPTION OF THE DRAWINGS

To more fully understand the invention, reference is made to the accompanying drawings or Figures (FIGS.) The invention is described in accordance with the aspects and embodiments in the following description with reference to the drawings or FIGS., in which like numbers represent the same or similar elements. Understanding that these drawings are not to be considered limitations in the scope of the invention, the presently described aspects and embodiments and the presently understood best mode of the invention are described with additional detail through use of the accompanying drawings.
FIG. 1 illustrates a block diagram of a data processing system, in accordance with the various aspects and embodiments of the invention;
FIG. 2 illustrates a schematic diagram of component parts of a power grid and supporting computing resources, in accordance with the various aspects and embodiments of the invention;
FIG. 3 illustrates a flowchart of steps performed, in accordance with the various aspects and embodiments of the invention;
FIG. 4A illustrates a graph of result of the thresholds produced by a characterization algorithm, in accordance with the various aspects and embodiments of the invention;
FIG. 4B illustrates a high-level view of characterization algorithm, in accordance with the various aspects and embodiments of the invention;
FIG. 5A is an example of a sample of data for 2 years prior to the current month, in accordance with the various aspects and embodiments of the invention;
FIG. 5B is an alternative sample of data for 3 years prior to the current month, in accordance with the various aspects and embodiments of the invention;
FIG. 5C is a block diagram of a threshold generation algorithm to produce one or more grade thresholds for a current period, in accordance with the various aspects and embodiments of the invention;
FIG. 5D is a block diagram of a threshold generation algorithm to produce one or more grade thresholds for a current period, in accordance with the various aspects and embodiments of the invention;
FIG. 6 illustrates an expression of the grade forecasts in a hand-held mobile device, in accordance with the various aspects and embodiments of the invention;
FIG. 7 illustrates a flowchart of steps to set grade thresholds for characterization, in accordance with the various aspects and embodiments of the invention; and
FIG. 8 illustrates a flowchart of an example computer implemented method, in accordance with the various aspects and embodiments of the invention.

### DETAILED DESCRIPTION

The following describes various examples of the present technology that illustrate various aspects and embodiments of the invention. Generally, examples can use the described aspects in any combination. All statements herein reciting principles, aspects, and embodiments as well as specific examples thereof, are intended to encompass both structural and functional equivalents thereof. Additionally, it is intended that such equivalents include both currently known equivalents and equivalents developed in the future, i.e., any elements developed that perform the same function, regardless of structure.

Appearances of the phrases "in one embodiment," "in at least one embodiment," "in an embodiment," "in certain embodiments," and similar language throughout this specification may, but do not necessarily, all refer to the same embodiment or similar embodiments. Furthermore, aspects and embodiments of the invention described herein are merely exemplary, and should not be construed as limiting of the scope or spirit of the invention as appreciated by those of ordinary skill in the art. The disclosed invention is effectively made or used in any embodiment that includes any novel aspect described herein. All statements herein reciting aspects and embodiments of the invention are intended to encompass both structural and functional equivalents thereof. It is intended that such equivalents include both currently known equivalents and equivalents developed in the future.

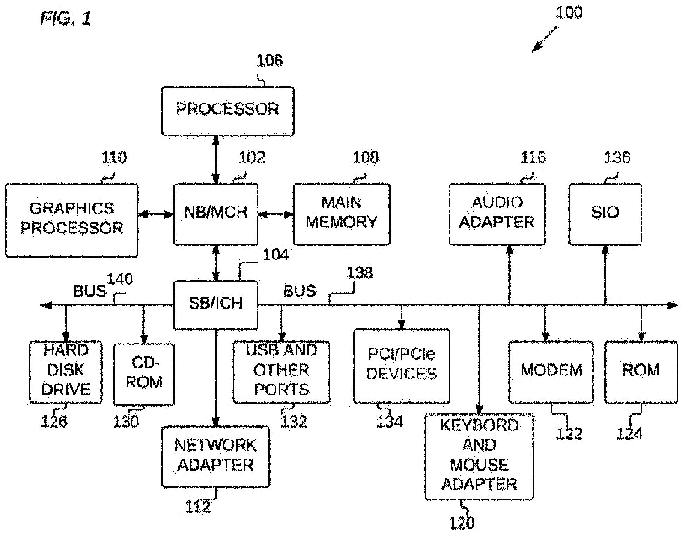

FIG. 1 illustrates a block diagram of a data processing system, in accordance with the various aspects and embodiments of the invention. With reference to FIG. 1, a block diagram of a data processing system is shown in which aspects of an illustrative embodiment may be implemented. Data processing system 100 is an example of a computer, in which code or instructions implementing the processes of the present invention may be located. In the depicted example, data processing system 100 employs a hub architecture including a north bridge and memory controller hub (NB/MCH) 102 and a south bridge and input/output (I/O) controller hub (SB/ICH) 104. Processor 106, main memory 108, and graphics processor 110 connect to NB/MCH 102. Graphics processor 110 may connect to NB/MCH 102 through an accelerated graphics port (AGP), for example. In the depicted example, local area network (LAN) adapter 112 connects to SB/ICH 104 and audio adapter 116, keyboard and mouse adapter 120, modem 122, read only memory (ROM) 124, hard disk drive (HDD) 126, CD-ROM drive 130, universal serial bus (USB) ports and other communications ports 132, and PCI/PCIe devices 134 connect to SB/ICH 104 through bus 138 and bus 140. PCI/PCIe devices may include, for example, Ethernet adapters, add-in cards, and PC cards for notebook computers. PCI uses a card bus controller, while PCIe does not. ROM 124 may be, for example, a flash binary input/output system (BIOS). HDD 126 and CD-ROM drive 130 may use, for example, an integrated drive electronics (IDE) or serial advanced technology attachment (SATA) interface. A super I/O (SIO) device 136 may be connected to SB/ICH 104.

An operating system runs on processor 106 to coordinate and provide control of various components within data processing system 100 in FIG. 1. The operating system may be a commercially available operating system such as Microsoft^{®} Windows^{®} XP. Microsoft and Windows are trademarks of Microsoft Corporation in the United States, other countries, or both. An object-oriented programming system, such as the JavaTM programming system, may run in conjunction with the operating system and provides calls to the operating system from JavaTM programs or applications executing on data processing system 100. JavaTM is a trademark of Sun Microsystems, Inc. in the United States, other countries, or both.

Instructions for the operating system, the object-oriented programming system, and applications or programs are located on storage devices, such as HDD 126, and may be loaded into main memory 108 for execution by processor 106. The processes of the present invention can be performed by processor 106 using computer implemented instructions, which may be located in a memory such as, main memory 108, ROM 124, or in one or more peripheral devices.

Those of ordinary skill in the art will appreciate that the hardware in FIG. 1 may vary depending on the implementation. Other internal hardware or peripheral devices, such as flash memory, equivalent non-volatile memory, and the like, may be used in addition to, or in place of, the hardware depicted in FIG. 1. In addition, the processes of the illustrative embodiments may be applied to a multiprocessor data processing system.

In some illustrative examples, data processing system 100 may be a personal digital assistant (PDA), which is configured with flash memory to provide non-volatile memory for storing operating system files and/or user-generated data. A bus system may be comprised of one or more buses, such as a system bus, an I/O bus, and a PCI bus. Of course, the bus system may be implemented using any type of communications fabric or architecture that provides for a transfer of data between different components or devices attached to the fabric or architecture. A communication unit may include one or more devices used to transmit and receive data, such as a modem or a network adapter. A memory may be, for example, main memory 108 or a cache such as found in NB/MCH 102. A processing unit may include one or more processors or CPUs. The depicted example in FIG. 1 is not meant to imply architectural limitations. For example, data processing system 100 also may be a tablet computer, laptop computer, or telephone device in addition to taking the form of a PDA.

The terminology used herein is for the purpose of describing embodiments only and is not intended to be limiting of the invention. As used herein, the singular forms "a", "an", and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Reference throughout this specification to "one aspect," "an aspect," "certain aspects," "various aspects," or similar language means that a particular aspect, feature, structure, or characteristic described in connection with any embodiment is included in at least one embodiment of the invention

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

As will be appreciated by one skilled in the art, aspects of the present invention may be embodied as a system, method, or computer program product. Accordingly, aspects of the present invention may take the form of an entirely hardware embodiment, an entirely software embodiment (including firmware, resident software, micro-code, etc.), or an embodiment combining software and hardware aspects that may all generally be referred to herein as a "circuit," "module" or "system." Furthermore, aspects of the present invention may take the form of a computer program product embodied in one or more computer readable storage devices(s) having computer readable program code embodied thereon.

Any combination of one or more computer readable storage device(s) may be utilized. A computer readable storage device may be, for example, but not limited to, an electronic, magnetic, optical, electromagnetic, infrared, or semiconductor system, apparatus, or device, or any suitable combination of the foregoing. More specific examples (a non- exhaustive list) of the computer readable storage device would include the following: a portable computer diskette, a hard disk, a random-access memory (RAM), a ROM, an erasable programmable read-only memory (EPROM or Flash memory), a portable compact disc read-only memory (CD-ROM), an optical storage device, a magnetic storage device, or any suitable combination of the foregoing. In the context of this document, a computer readable storage device may be any tangible device that can store a program for use by or in connection with an instruction execution system, apparatus, or device. The term "computer-readable storage device" does not encompass a signal propagation media such as a copper cable, optical fiber or wireless transmission media.

Computer program code for carrying out operations for aspects of the present invention may be written in any combination of one or more programming languages, including an object-oriented programming language such as Java, Smalltalk, C++ or the like, and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable storage device that can direct a computer, other programmable data processing apparatus, or other devices to function in a particular manner, such that the instructions stored in the computer readable storage device produce an article of manufacture including instructions which implement the function/act specified in the flowchart and/or block diagram block or blocks.

The computer program instructions may also be loaded onto a microcontroller, a service processor, or other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

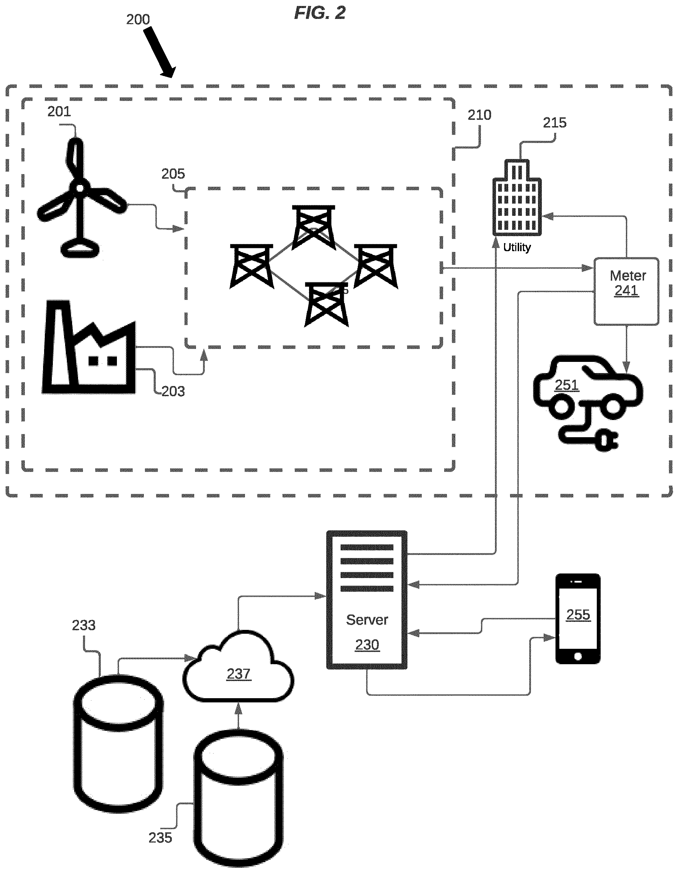

FIG. 2 illustrates a schematic diagram of component parts of a power grid and supporting computing resources, in accordance with the various aspects and embodiments of the invention. A balancing authority (BA) is responsible for grid balancing, resource planning, unit commitment ahead of time, maintenance of the load-interchange-generation balance within an electric transmission grid (control area), and support for real-time load-frequency control. An electric transmission grid 200 may be made up of at least one variable energy resource 201 including, but not limited to a wind turbine and/or a natural gas burner, transmission power lines 205, and corresponding load resources, such as, for example, electric vehicle 251.

A variable energy resource may be any resource that has a prime mover that is intermittent and variable, such as, for example, wind turbines, photovoltaic arrays, solar concentrators, and the like. Referring again to FIG. 2, load resource is any electric item which, by comparison with other loads behind a meter 241, can draw a lot of electricity at one time. At a residence, a load resource may include electric vehicles, electric water heaters, electric space heaters, heat pumps. Though not required, some load resources may be semi-autonomous load resources. A semi-autonomous load resource is a resource that may, in part, operate without direct human intervention to draw power, to taper power, to moderate power and/or to discontinue drawing power beyond that needed for logic controls. Accordingly, an electric vehicle can be a semi-autonomous load resource.

In accordance with various aspects of the invention, a way for a device to be semi-autonomous is to accept a user-input to select a time to begin or to end charging. The selection may set a timer or other scheduling mechanism that triggers a charge at the specified time at the semi-autonomous load resource. In accordance with various aspects of the invention, a device can be semi-autonomous, when in combination with a mobile device, e.g. an app, first, the mobile device may record the time inputs from the user, and second, the mobile device may remotely command the battery to charge when the mobile device detects that the input time is reached. Such remote commands may operate using wireless and wired networks to communicate with a computer or other device that engages contractors to close the battery charging circuit, at the device.

Transmission power lines 205 may transport current to loads such as load resources such as electric vehicle 251. Additional devices may support transmission power lines, such as step-down transformers, switch-yards, distribution panels and the like.

Some energy resources are dispatchable energy resources. The electric transmission grid 200 may have additional energy resources such as, for example, combined-cycle gas generator 203. A dispatchable energy resource is a resource that, provided a fuel is on-site, and the generating apparatus is in good working condition, can respond to commands to generate electricity without delay. At least one energy resource 210 are ramped up and ramped down so that their aggregate generation, less any line losses within transmission power lines 205 meet or exceed loads present on the grid by load resources such as electric vehicle 251. The balancing authority can use price signals to get energy resources to come online and drop offline, as needed, to maintain balance between generation and loads. An energy resource is any device that generates electricity from a prime mover, for example, wind, heat from fission, water from a dam. A load resource is any device that can operate to take electricity from a grid. A load resource can be a battery resource. A battery resource is a device that may store electricity, for example, by using a rechargeable battery. A battery resource can include a device that stores for example, water or a reservoir of heat. Electric vehicle 251 is shown purely for exemplary purposes, and it is appreciated that many residences, businesses, and processes operate one or more devices that collectively draw electric power.

The load for a grid is the combined electrical needs of load resources such as electric vehicle 251. Accordingly, there are at least two load resources on a grid. A grid may obtain further power from generation outside its direct control. Though not depicted in FIG. 2, a balancing authority may dispatch cooperatively one or more energy resources 210. Dispatch can include sending price signals to the energy resources on the grid, so that at least one energy resource 210 may self-select whether to add electricity to transmission power lines 205. A dispatched resource is one that operates to generate electricity and places such electricity on transmission power lines 205.

FIG. 2 shows electric transmission grid 200 also having a system to direct demand on the grid. Server 230 collects information via, for example, data network 237 from total load forecast 233. In accordance with some aspects and embodiments, a total load forecast for the electric transmission grid is for one or more load resources, wherein the first total load forecast is based on at least one selected from the group consisting of historical data, weather patterns and economic indicators, wherein the first total load forecast comprises a series of load values corresponding to each period in the time series. In accordance with some aspects and embodiments, historical data is a data set that for a given calendar day, or observed holiday, provides a time-series of meteorological and/or demographic data together with a load that corresponds to each of the time-series load. As such, the historical data can be stored on a hard drive at a remote location and characterized with statistical terms such as, for example, mean, standard deviation and the like that summarize the broader set of, for example MW of power demand by a corresponding grid. Each load value, in the historical data, may be the summation of electric meters within the grid as collected by utilities, balancing authorities and the like. Historical data can be placed into bins, where load curves for a diurnal period are placed with load curves for diurnal periods with similar temperatures over the diurnal period. As such, each bin corresponds to temperatures, and therefore, also to loads that depend upon temperatures. Such bins can be used as a reference to project loads into a forecast, based on a forecast temperature in each of the forecast periods. In accordance with some aspects and embodiments, total load forecast includes information related to or input from many actors/users. This data or information is collected information based on the users/consumers being allowed to make decisions about using renewable resource. The user is making decisions about user of renewable resources relative to available traditional resource that are not renewable (such as coal power), The user's decision to use loads will be result in loads following the timing of generation of energy (using renewable), instead of traditional approaches wherein generation of energy that follows the load demands or anticipated demands.

Accordingly, a step in establishing a total load forecast can be using weather patterns as an input and selecting a load function that best corresponds to the weather expected. Weather patterns can include time series information across a geographic area consisting of, for example, temperature, precipitation, winds, probability assessments for precipitation, humidity, and the like, both as real-time data, as well as modeled future conditions. Public sources of weather patterns can be in the form of weather forecasts available in the United States from the National Oceanic and Atmospheric Administration and the National Weather Service from their sources on the internet. Economic indicators may contribute to the total load forecast. It is within the scope of this invention for an economic indicator to be a relative change in population for an area since a previous census, a holiday schedule that is widely observed in a geographic area, the number and kind of electric vehicles deployed in an area, and/or any value, collected, interpolated, and/or projected that may change economic activity in a region. Accordingly, the indicators stated are merely examples.

Accordingly, the total load forecast is a multivariate projection of loads within an electric transmission grid, relying on historical data, weather patterns and/or economic indicators. An example of the total load forecast is the data present in dashboards such as, at the Electric Reliability Council of Texas (ERGOT). The total load forecast is a series of power values corresponding to a time series of periods. The ERCOT dashboard, for example, depicts the total load forecast as hourly demand forecast of megawatt values over up to six future days.

Referring again to FIG. 2, server 230 also takes data from total wind power forecast 235. In accordance with some aspects and embodiments, the server 230 collects information in real time and can access a remote data storage sites or servers. In accordance with some aspects and embodiments, the server 230 also analyzes the data, as discussed herein, for the purpose of providing options to users/subscribers.

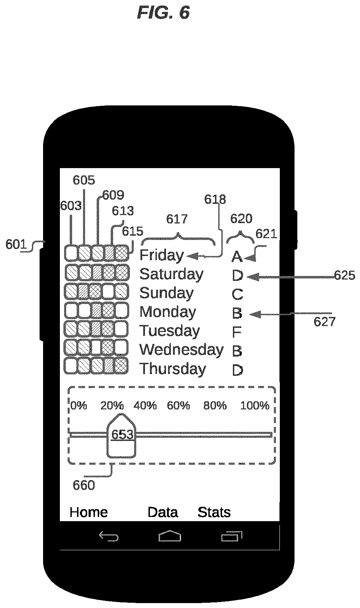

A total wind power forecast is a time series of the expected outputs from at least two variable energy resources, such as, for example variable energy resource 201. Variable energy resource 201 may be a wind turbine. Factors that affect the forecast power from a wind turbine can include, for example: maintenance status; cut-in wind speed; cut-out wind speed; forecast wind direction; forecast wind speed; wind turbine wake effects; forecast icing; and the like. Each of these factors can be used to create a generation plan for a single wind turbine, that corresponds to a time-series during the forecast period. The summation of all wind turbines commercially active and synched to a grid frequency may form the total wind power forecast. An example of a total wind power forecast can be found at dashboards such as at ERCOT. User device 255 can render information concerning the total load forecast and total wind power forecast for the benefit of a user, for example, of an electric vehicle 251. User device can be, for example, data processing system 100 of FIG. 1. An embodiment of user device 255 is depicted at FIG. 6, for example, as explained later. It is appreciated that a user device is a broad class of devices and as such, could be worn, present in the dashboard of a vehicle, or even located in an electric vehicle supply equipment apparatus. These are but a few examples of the form a user device can take. Utility 215 may operate as a financial coordinator to secure blocks of electricity from variable energy resources among other energy resources for use by consumers, as measured by meter 241. Meter 241 may report a time series of kilowatt-hour usage for a consumer by being polled by an advanced metering infrastructure (AMI) intermediate server. The AMI intermediate server can store the usage information for later query/response interactions with authorized users and those authorized by the users. In such cases server 230 may make such queries to the AMI intermediate server to receive reports on the customer's electric use over time. The server can use algorithms to detect level 2 charging events in such reports, for example, by detecting usage that is above a characteristic power consumption of the electric vehicle supply equipment that the consumer has previously specified. As such, each charging event that coincides with a peak wind event can be eligible for a rebate. In which, case, to the extent such rebates are available, server 230 can report the availability of such rebates to utility 215 for further processing.

In accordance with some aspects and embodiments, meter 241 may be located in a different time zone. A grid in a timezone, one or more hours advanced, from the current timezone, can provide insights into any holidays or events that trigger, at the community level, departures from normal energy consumption. In accordance with some aspects and embodiments, meter 241 may be multiple meters located at multiple locations in different time zones, all the data from which is aggregated and correlated at the server 230. In accordance with some aspects and embodiments, the meter 241 is providing data from a time zone that is different from the user's time zone. This data reflects information from grids ahead of the user's grid, where the user will be making load demands. Thus, in accordance with some aspects and embodiments, the server 230 can receive data or information from third parties that are not part of the electric grid being serviced by the server 230.

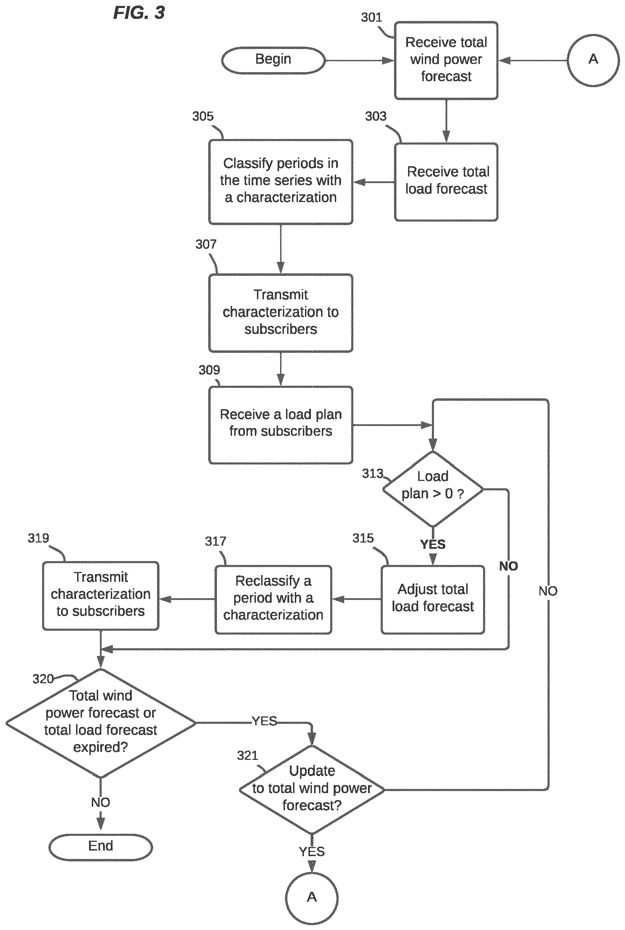

FIG. 3 illustrates a flowchart of steps performed, in accordance with the various aspects and embodiments of the invention. Flowchart steps may be performed by, for example, server 230 of FIG. 2. Initially the server may receive a total wind power forecast at step 301, where the total wind power forecast corresponds to an electric transmission grid. Electric transmission grid can operate with two or more variable energy resources, such as, for example, wind turbine generators. The electric transmission grid may have load resources, for example load resource being electric vehicle 251 of FIG. 2. A way to receive a total wind power forecast is to query an internet-accessed page from a balancing authority. Accordingly, the server may execute an application programming interface (API) query and response to a resource operated by the Electric Reliability Council of Texas (ERCOT). Alternatively, the server may receive a total wind power forecast as follows. Server 230 may receive wind and other meteorological forecasts at or near wind turbine locations. Server 230 may apply heuristics based on a power production curve for the specific model wind turbine to initially determine the transformation of hub-height wind speed forecasts to forecast wind turbine megawatt outputs. Additional transformation by the server of these raw megawatt outputs can forecast wind turbine megawatt outputs based on wind direction and modeled wake-turbulence from upwind wind turbines. Through repeated execution on a per wind turbine and per local wind, a forecast can be summed by server 230 to reach a total number of megawatts for each period in the total wind power forecast.

Accordingly, any server access to, e.g. total wind power forecast 235 of FIG. 2, may be merely to obtain sufficient wind and other meteorological data to apply to a model of the aggregate wind turbines supplying a grid, in order to further calculate the total wind power forecast in more specific terms of megawatts to be expected from all wind turbines that supply the grid. As may be appreciated, the addition of wind turbine maintenance status may cause server to discount entirely any megawatt output from any wind turbine expected to be under maintenance from the total wind power forecast during applicable periods. Accordingly, further queries, e.g., via APIs for specific wind farms (aggregations of wind turbines), or obtaining further aggregated data from a balancing authority may contribute to a more accurate calculation of the total wind power forecast. Many other data sources can add to the accuracy of any such forecasting, for example, even as a modifier to data that is received from a balancing authority.

One alternate data source can be Hoen, B.D., Diffendorfer, J.E., Rand, J.T., Kramer, L.A., Garrity, C.P., and Hunt, H.E., 2018, United States Wind Turbine Database v5.3 (January 13, 2023): U.S. Geological Survey, American Clean Power Association, and Lawrence Berkeley National Laboratory data release, https://doi.org/10.5066/F7TX3DN0. The Hoen dataset includes the age of a wind turbine, which may be used to adjust for deterioration in aging wind turbine blades, and therefore, reduce expected power from older wind turbines.

A second alternate data source can be a report made from a wind farm operator about non-maintenance related reductions in wind farm operations. For example, a wind farm operator may choose to halt turbine operations during migration of birds, bats, or for any other reason that is not specifically reported to the balancing authorities.

Referring to FIG. 3, multiple queries and further synthesis and transformation of total wind power forecasts can be among the sub-steps within server 230 receiving total wind power forecast 235. At step 301, the method may include server 230 further processing a new, replacement, total wind power forecast 235, in the case that an initial check determined that a total wind power forecast is new, at step 321, explained further below. Next, server 230 may receive a total load forecast 233. The total load forecast 233 may be for the electric transmission grid corresponding to load resources. The total load forecast may be from a balancing authority. Next, server 230 may classify periods in the time series with a characterization 305. It is within the scope of this invention for characterization 305 to include, but not be limited to, a summary of the information relating to renewals and includes labels. Next, the server 230 may transmit the characterization to subscribers 307. It is within the scope of this invention for a subscriber to include, but not be limited to, an individual and/or a crypto system configured to mine for low-cost power. Next, at step 309, the server 230 may receive a load plan from subscribers. In accordance with some aspects and embodiments, the load plan is entered or provided by users on their device or the device running an application or software program, as noted herein. The subscribers are allowed to make a level of commitment for certain hours that are identified or selected by user. These hours are classified, thereby allowing the user to use power resources intelligently. In accordance with some aspects and embodiments, the load plan is a choice, either by default or by active change/changes through a user interface. The user/subscriber indicates the approximate energy that is intended to be obtained during an upcoming period, for example, at night. The load plan can be broad, in that it describes intentions to charge before dawn. The load plan can be specific, in that it can describe the specific hour or minute that a charge is intended to start and/or end.

In accordance with some aspects and embodiments, the load plans, which are from many users, are used to train a machine learning model or artificial intelligence model. The model can then suggest times or even select time for the load to come on line to the user. The user can accept the model's suggestion, reject the model's suggestion, or partially accept and partially alter the model's suggestion. The change or information produced by the user is used as feedback to the model for further training of the model.

Next the server 230 may determine whether the load plan is greater than zero, whether a load plan is received at all at step 313. In response to the server 230 receiving or determining that the load plan, as received from subscribers, is greater than zero, the server 230 may adjust the total load forecast 315. For example, the total wind power forecast may be first initially received at step 301. As may be appreciated, server 230 may adjust or revise in multiple iterations, as process 300 cycles back to step 301. Accordingly, multiple total load forecasts may be obtained through successive adjustments. The feature of being able to supply multiple total load forecasts helps embodiments continuously provide better information to subscribers, e.g., at step 309 and at step 320.

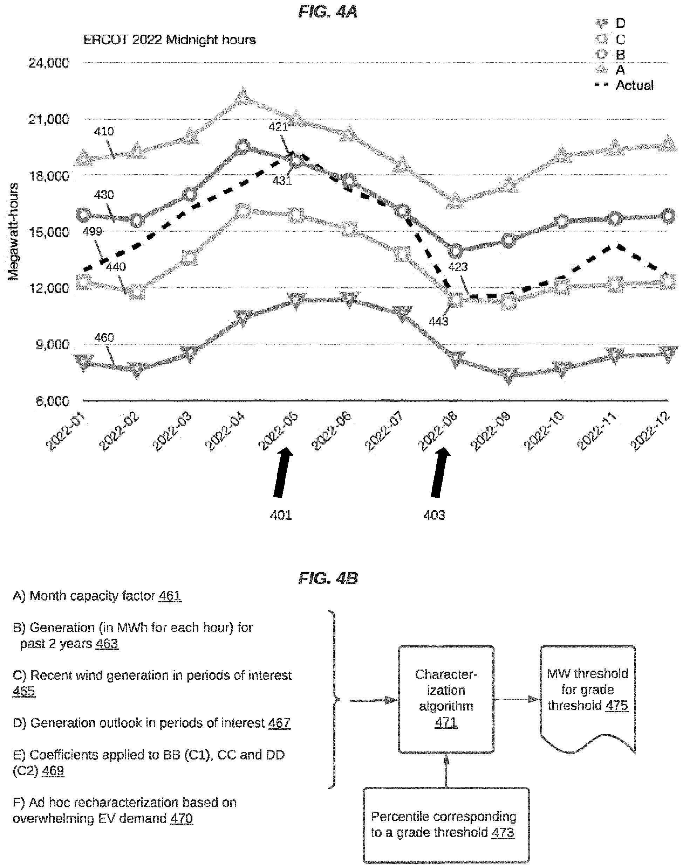

Referring again to FIG. 3, server 230 may reclassify a period with a characterization 317. Characterizations are explained further, at FIG. 4A, below. Next, the server 230 may transmit the characterization to subscribers 319. Next, the server 230 may determine if the time period for either the total wind power forecast or total load forecast has expired 320. For example, a 1:00 AM forecast for a geography or grid may expire once the local time in that geography or grid reaches 1:00 AM. In the case that step 320 is 'YES', processing terminates. However, if step 320 result is 'No', processing continues to step 321, below. Next, the server 230 may determine if there is an update to the total wind power forecast at step 321. For example, the determination can be made by accessing a server 230 or API that provides total wind power forecasts. If the currently accessed total wind power forecast differs from a previously accessed total wind power forecast for the applicable period, the step 321 results in 'Yes' and processing continues at step 301.

A characterization is a characterization of a grid and a wind interaction in terms that are adjusted to reflect the seasonal winds impacting a grid and the capacity of installed wind turbine equipment to generate electricity. A simple version of a characterization is assigning a letter grade, selected from among letters A, B, C, D and F so that there are five gradations of characterization. A feature of the characterization, is that the algorithm that produces it can produce letter grades in roughly equal proportions, regardless of the season, and regardless of the installed wind turbine equipment nameplate capacity. In other words, the algorithm can apply seasonal variability to a statistical distribution of historic wind outputs, and project to such adjusted statistical distributions, a growth experienced by the wind generation, to adopt MegaWatt (MW) thresholds between each grade, such that, over extended periods, the proportion of grades made for each grade is roughly equal to 20%. Nameplate capacity is the capacity of electric power or generation that a wind turbine can produce under nominal conditions. Nominal conditions can be for wind conditions between rated-output wind speed and cut-out wind speed.

A first consequence of producing a stream of characterizations that are season agnostic and build-out agnostic, is that users who seek to find a certain characterization, e.g., letter grade, can be reasonably assured that the grid output will be predicted to have the characterization sought-for, within certain statistical variations. A second consequence is that moving between grids, that have differing seasons and differing buildouts, can result in a similar statistical production with respect to the second grid as was experienced in the first grid. A third consequence is that individual users who like to compete, have a leveled playing-field with other users who may experience a second grid.

In addition to compensating for seasonality, and system build-out, some weather patterns can influence winds on a scale of 6 months and longer. These long-term weather variations can include, for example EI Niño-Southern Oscillation, Pacific Decadal Oscillation (PDO) and Tropical North-Atlantic Oscillation (TNAO). Accordingly, the algorithm must give weight to recent months, as they may correlate better to longer-term variations in weather. Finally, to the extent forecasts of future wind strengths and megawatt outputs of the wind turbine infrastructure, these forecasts can also provide an input to correlate with the shifts that can be from the large-scale weather patterns.

FIG. 4A illustrates a graph of the result of the thresholds produced by a characterization algorithm, in accordance with the various aspects and embodiments of the invention. The algorithm, for example, is operating on ERCOT hourly wind-turbine output for the 2020-2022-time frame, to produce grade thresholds including, but not limited to MW and/or megawatt hours (MWh) for each grade in each month of 2022. Overlaid in the thresholds is the actual average MWh production 499 for the midnight hours for each month. As can be seen, the average pierces the C/B threshold line 430 at least at 431 in May 2022. Further, the average MWh production 499 approaches the D/C threshold line 440 at 443. In each of these situations, the grades are skewed high, and then low, respectively. A benefit of five grades as the gradations of characterization, is that in the May condition 421, an absence of 'F' grades still allows users to adjust driving/charging habits to seek the high grades while avoiding the low grades. Similarly, in August actual 2022 averages 423, the 'A' grades may be relatively absent. Nevertheless, a user can use 'B' as a temporary indicator that for that month, charges during such 'B' designated periods can obtain a relative benefit for seeking renewable energy use as compared to the C and lower designated periods.

Importantly, each of these gradations/thresholds uses midnight hours as the optimization function value. These values, on a 24-hour clock, are selected for two reasons. First, the winds in the ERCOT grid tend to have maxima in these hours, namely the hours ending 23, 24 and 1. Second, demand in the grid starts to approach a local minimum for the diurnal cycle of human activity. Accordingly, the ratio of winds to load on the grid can be at a peak during these times. Accordingly, when sampling an hourly record of wind outputs, only these times may be selected as these times are good times to direct electric vehicle drivers, as a fleet, to absorb wind generation that frequently either exceeds load or exceeds load net of base-generation. These may be the hard to shut-down nuclear and/or natural gas cogeneration processes. Further, for additional load being added to the grid during these times, wind turbines must be curtailed to satisfy the alternating frequency requirements necessary on a grid and keep the grid balanced. For example, electricity is added to the grid within a tolerable level of the electricity lost by normal consumer demand and line losses.

It is appreciated that these hours can be extended, particularly, as more responsive loads are introduced to the grid, and the relative minimum that commonly occurs at or near midnight for load, are flattened and/or moved to different times. Further, as climate and long-term weather patterns can shift the localized maximum wind, these sampled times can shift to reflect new norms for statistical maximum wind periods. In addition, siting of wind turbines in, e.g., offshore environments, as well, can shift the diurnal wind maximum pattern when formed as an average for the whole of the grid. Thus, these times are merely illustrative of the current wind maxima. Grids other than that served by ERCOT can have different diurnal patterns. For example, the grid operated by the Southwest Power Pool (SPP) just North of ERCOT, also follows a midnight hours peak, on average, through most seasons. It is within the scope of this invention for longer periods of time to smooth out weather pattern influences. However, they tend to negate improvements in wind siting technology and hub-heights. 5C depends on it.

The thresholds for grades in the month ahead have been shown to correlate well with two classes of data in the wind record. The first class of data is the capacity of the system as modified by capacity-factor for that month. In the aggregate, the statistical variation of wind MW generated on a grid will correlate well with multiple years, adjusted for each month, particularly if the grid build-out is at less than 10% annually. Accordingly, statistical values for blocks of hours of interest, for example, the midnight hours, can be used to establish future probability density functions for winds during those hours of interest. Sampling multiple years of data can compensate for variability of the wind, year-to-year.

FIG. 4B illustrates a high-level view of the characterization algorithm, in accordance with the various aspects and embodiments of the invention. Among the inputs to characterization algorithm 471 are, for example, input 461 being month capacity factor; input 463 being generation for the past two years for example, on an hourly, daily and monthly basis; input 465 being recent wind generation; generation outlook 467 and coefficients applied to one or more of the inputs 469; and ad hoc re-characterization based on overwhelming electric vehicle (EV) demand 470, explained further with reference to FIGS. 4A, 4B and 6. Characterization algorithm 471 is geared with an eye toward developing a threshold between adjacent characterizations, for example, the F and the D grades. Accordingly, when operating on large data sets of winds under certain conditions (month, and midnight hours), a percentile of MW outputs can be measured from among inputs 461, 463 and 465. At step 473, a percentile corresponds to a grade threshold. Continuing with the F->D example, a suitable percentile can be 20th percentile. Under this scenario, the 40th, 60th and 80th percentiles can be the filtered/deciding values for the D/ C; C/B and B/A thresholds, respectively. From the characterization algorithm, for a given set of inputs, for a given month and/or other seasonal indicator, a set of MW output thresholds can be established -- in the case of five grades, there are four threshold values 475. The threshold values 475 can be updated on, e.g., a monthly schedule. As such, the thresholds can be revised near a month end, using data from a prior 24, 36 or other 12x multiple of months of MW output in the grid's record.

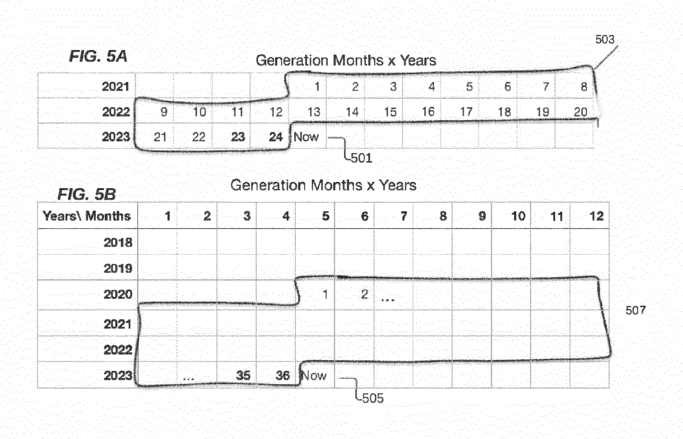

FIG. 5A is an example of a sample of data for 2 years prior 503 to the current month 501, in accordance with the various aspects and embodiments of the invention. The midnight hours actual MW (or MWh) outputs of a grid can be statistically measured, for example, by calculating percentiles such as 20%, 40%, 60% and 80%.

FIG. 5B is an alternative sample of data for 3 years prior 507 to the current month 505, in accordance with the various aspects and embodiments of the invention. More years of sampling smooths out further year-to-year wind variability, but suffers because it includes an older year with a fewer operating wind turbines, thereby making the average lower that if current built-out of turbines were alone considered. Accordingly, samples 507 contribute to establishing suitable guiding grade thresholds now 505. Nevertheless, a three-year sample can be useful, and compensate for growth in other ways.

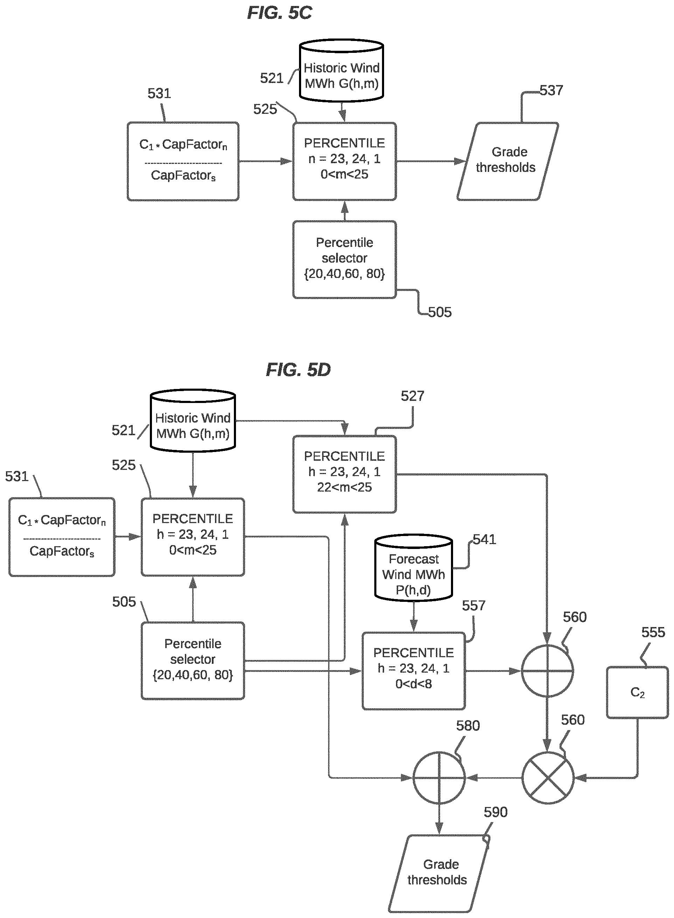

FIG. 5C. is a block diagram of the threshold generation algorithm to produce one or more grade thresholds for a current period, for example, a month in accordance with various aspects and embodiments of the invention. A data set 521 of historical wind megawatt-hours (MWh) for each hour provides data that can be arranged in a frequency distribution. For a period of months (m) there are hours, indexed by variable 'h', that can be used to lookup data from the data set. Percentile generator 525 operates on a subset of data set 521, for example, the periods for hour ending 23, hour ending 24 and hour ending 1, otherwise known at 11PM, 12AM and 1AM hourly generating values. Further, percentile generator 525 can be operated to select a specific month range, such as, e.g., depicted in FIG. 5A, the 24 months prior to the current month.

To generate thresholds for five grades, A, B, C, D and F, four thresholds may be selected from percentile generator. These thresholds can correspond to the 20th percentile, 40th percentile, 60th percentile and 80th percentile. Because these percentiles can be iteratively obtained for each month, as time passes, the grade thresholds may be generated on a monthly schedule, for example, at the end or near-end of a month. Accordingly, to provide an adjustment to reflect seasonal variability of wind, a ratio of grid capacity factor for the month (CapFactorₙ) is made relative to a whole-year of the system (CapFactorₛ). The ratio of CapFactorₙ/CapFactorₛ can typically be between 1.5 and 0.75.

A capacity factor is a proportion of the nameplate capacity for wind turbines, alone, or in a system, that is actually generated during a month or other period of time. The capacity factor correlates, often, with the strength of prevailing winds in the area. However, it is also impacted by the design of the wind turbines themselves. A typical capacity factor for wind turbines in Texas is about 40% of the nameplate capacity. In ERCOT, the monthly capacity factor for years recent to 2023 is: 38, 38, 38.5, 45, 38, 35, 32, 29, 36, 40, 38 and 38 percent for months January through December. It is appreciated that the capacity factors selected can vary depending on the depth of historical data available, as well as sophistication of the turbine deployments and even algorithms to select yaw of wind turbines in relation to the heading of winds. Accordingly, these values are only exemplary of recent weather and/or sophistication in the deployment of wind infrastructure. Often the capacity factor can be obtained by averaging the ratios of annual generation to average nameplate capacity during a period of years. As such, it gives a value that may be what can be expected as average utilization for wind turbines as the system grows.

A monthly capacity factor can be the average of the ratios of the month generation to average nameplate capacity, that month, during a period of years. In other words, for a period 2010-2019, each of the 10 January ratios of actual production to nameplate capacity can be summed and divided by 10 to produce a capacity factor applicable to January in that grid. In other words, the average power for the months is divided by the average power of the year, and that sum of month v. year averages is itself averaged to form a monthly capacity factor. Accordingly, a ratio of a monthly capacity factor to a system capacity factor, can provide a factor to adjust a given percentile to match what can be an expectation for a seasonally typical month. In addition, a weighting coefficient, C1, is a value to assign historical and seasonal adjustments to percentiles. Accordingly, component 531, applies weighting coefficient with ratio of monthly capacity factor to system capacity factor to be a factor applied to percentile generator 525. The outcome of that calculation is a backward-looking set of grade thresholds 537. These values are only backwards looking, and do not give much weight either to recent wind activity. Additionally, and forecast is also not accounted for.

FIG. 5D is a block diagram of the threshold generation algorithm to produce one or more grade thresholds for a current period in accordance with various aspects and embodiments of the invention. FIG. 5D adds to FIG. 5C contemporary wind data, in accordance with the various aspects and embodiments of the invention. The threshold generation algorithm further sums additional impacts from more contemporary wind activity and even the forecasts of wind. Accordingly a contemporary component, C₂, 555, can be applied to more contemporary wind data. No monthly capacity factor is applied with the contemporary data, because there may be an unseasonable change in the wind in the current periods. Percentile generator 527 can select recent months such as the last month (24) and the second-to last month (23) from historical wind data 521.

In contrast, recency percentile generator 557, can select a 7-day forecast of winds for midnight hours: 23, 24 and 1. Each of the percentiles obtained from 527 and 557 can be summed at summer 560 to produce a sum. That sum, for a given percentile, can be multiplied by contemporary component C₂ 525 at multiplier 570. Summer 580 can sum the outcomes to percentile generator 525 and multiplier 570 to form one or more grade thresholds. Accordingly, four grade thresholds may be output as seasonally-adjusted, current weather-pattern adjusted grade thresholds 590.

It is appreciated that the month coverage in percentile generator 525 can, in alternative embodiments, be expanded to a 36 month period (1 indexed as oldest, and 36 indexed as most recent), as depicted at FIG. 5B. Further additional periods of years may be selected beyond the mere three of FIG. 5B. Similarly, recency percentile generator 557 can alternatively cover a period of less than two months or longer than two months in order to account for shorter-interval weather trends, which can include, for example, EI Niño type effects. A good rule of thumb, for taking recent data into percentile generator 557, is to keep the backwards looking data limited to the prior 92 days or less.

In summary, current-weather-pattern adjusted grade thresholds 590, produced in FIG. 5D, can be used in characterization 305 of FIG. 3 to provide a balance between historical seasonal winds and more current wind patterns that may temporarily raise or lower expected winds in the coming nights.

During times of low, or no system growth, C₁+C₂ can equal 1. However, during periods of growth, the historical pattern, expressed at output to percentile generator 525, is a lagging indicator, so the sum of C₁+C₂ can be somewhat higher than 1 to compensate for growth in wind turbine additions to a grid. Outcomes of 5D can, for each month, set the thresholds by which characterization of MWh forecasts can be made with a grade designation. The progression of each threshold through the months of 2022 may be seen in FIG. 4A. In other words, each set of four thresholds can be produced by a characterization algorithm, in accordance with the various aspects and embodiments of the invention.

FIG. 6 illustrates an expression of the grade forecasts in a screen of an electronic device 601 including, but not limited to, a hand-held mobile device, in accordance with the various aspects and embodiments of the invention. Electronic device 601 has a user interface on a display that displays rows of forecast winds, labeled by the night 617, as it is called before midnight. For each night 617, a characterization 620 is displayed. For example, Friday 618 has a grade forecast of 'A' 621. The forecast wind, for example, being the expected peak during the night hours, may be determined by server 230 of FIG. 2 to exceed the threshold required for 'A' grade, for example, as shown at threshold 410 of FIG. 4A. In contrast, Saturday has grade 'D' 625, which may be determined to be between threshold line 440 and 460 of FIG. 4A. Further, Monday has grade 'B' 627.

FIG. 6 may also provide characterizations of, rather than a peak wind, overnight, individual hour MWh forecasts. These characterizations may be using an alternative scale and quantity of gradations than the grade characterizations. And, rather than a grade, an alternative characterization format can be used, such as, for example, variations of color over 10 shades. In cases of 10 possible classifications output to FIG. 4B, for example, require nine thresholds to be provided. This can be accomplished by varying the percentile selector inputs to, for example, select for percentiles 10, 20, 30, 40, 50, 60, 70, 80 and 90, for example. In an example a shade may include any color including, but not limited to, #ff0000, #ff9933, #ffcc00, #ffff00, #cccc33, #999999, #b0c4de, #6495ed, #4169e1, and/or #0000ff. In an example, first color 603, second color 605, third color 609, fourth color 613, and fifth color 615 is displayed to a user (not shown) on a display of electronic device 601. Further, the initial color can correspond to the lowest or weakest wind percentiles, and the final color can correspond to the strongest of wind percentiles expected, on an hourly, rather than a nightly basis.

Referring again to FIG. 6, electronic device 601 such as, smartphone, can also transmit feedback to server 230 through use of a slider user interface 660. Indicator 653 is configured to slidably traverse slider user interface 660 to indicate percent. A user can commit to either no charge on a given night ahead, or to a percentage from 1-100% of the battery that they control in their electric vehicle. Commitments made in this way can be received as, and contribute to, a load plan received from subscribers to the service of server 230. Accordingly, with sufficient feedback, a load can rise to such a level that the grade characterization can be modified to reflect an unusual or unexpected surge in demand. For example, if a load received, in the aggregate, at step 309, exceeds 20% of load forecast received at step 303, the grade characterization can be diminished one grade. Further, if the aggregate load, received for a night at step 309 exceeds 90% of load forecast received at step 303, the characterization can be diminished a further grade. Accordingly, demand of electric vehicles can be moderated, even on windy nights, to not overwhelm the high wind outputs. As such, responding to a fleet of users returning feedback for load can lower the 'goodness' of the signal that recruits further users in the fleet -- thereby avoiding a demand sufficient to trigger additional non-renewable generators to come on line.

A value of the accumulated load expected to be charged by all users can be obtained by multiplying each individual user's percent of charge that they commit, e.g., via indicator 653, by a pre-set nominal battery storage of the vehicle that the user has previously associated with their account. Accordingly, such a nominal battery storage, normally expressed in kilowatt-hours (KWh) can be used to generate an amount of charge expected on a given vehicle and summed to the fleet, to obtain an aggregate of demand reported for all users. Further, it is within the scope, that users may adopt, as a default commitment, a specific value, merely by opening the application and registering that the app presented the slider to the display of the device. As such, a baseline presumption is that the user saw, approved, and acted on the value of the slider. It is appreciated, that aside from the slider, a user can register approval for a default commitment by, for example, being presented a mobile text that reminds the user of a default value for the specific car for the night corresponding to the text. In other words, the electronic device 601 may monitor such mobile texts, and report them to the server, e.g. server 230 of FIG. 2, for inclusion in a new load plan. A mobil text can be a notification provided on the mobile device whether appear in-app or as a pop-up within the greater operating system on the mobile app.

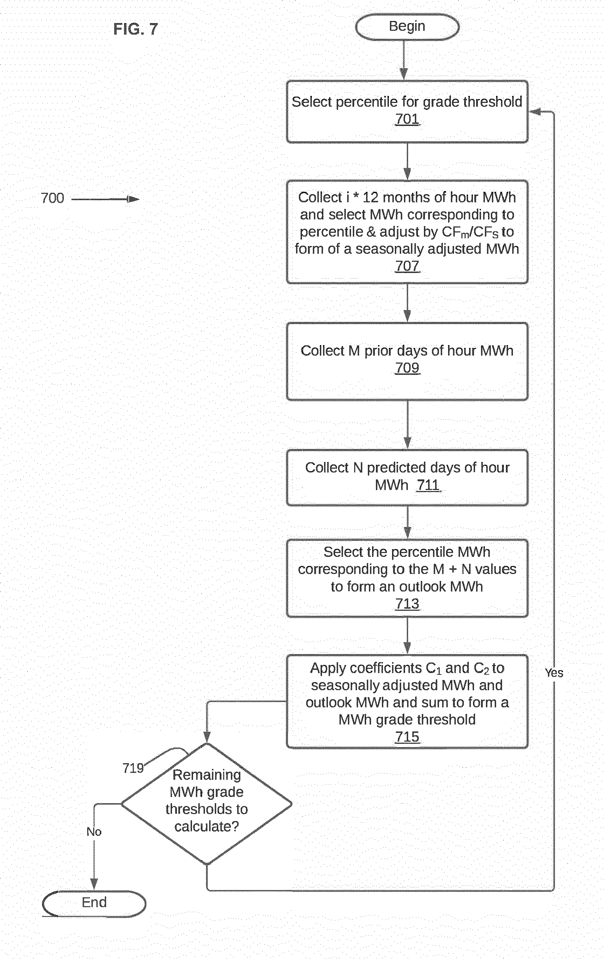

FIG. 7 illustrates a flowchart of steps to set grade thresholds for characterization. Initially, server 230 (of FIG. 2) can select the percentile to be applied for a grade threshold at selection step 701. It is within the scope of this invention for the percentiles to vary from the 20, 40, 60 and/or 80, described herein. And further, grades do not have to be limited only to five. As well, a 'grade', can easily be substituted with any other sequential set of indicators, including simple integers, and smiley face emojis that vary from frowning to happy. Accordingly, the thresholds can be one less than the number in the set of characterizations that can be presented to the user, in oder to resolve a forecast wind MWh to one of the set.

Grades are a convenience that transcend many cultures in terms of indicating mastery and compliance. But, and in particular, simpler devices than smartphones may have to convey this data. Where the user-interface is primitive, a simple color scheme of red, orange, yellow, green, blue may have to suffice, where only a LED is available on the user-device. Accordingly, at step 701, a server, such as server 230, may select a first percentile, such as 20%. The 20-percentile value of MWh for the hours of interest is established in the 'i' years prior to now at step 707. Next, the server 230 may collect M prior days of MWh in the hours of interest at step 709. Next, the server 230 may collect N forecast days of MWh in the hours of interest at step 711. Next, the server 230 may get the 20-percentile value for the combined sampling of M and N values at step 709 and at step 711 at percentile selection at step 713. Next, the server 230 may apply coefficients C1 and C2 to weight the historical together with the near-term values, to form the MWh threshold applicable to the percentile, and thus the grade at step 715. Next, at step 719, if further grades are needing a percentile threshold to be established, processing continues at step 701 until all gradations have suitable MWh thresholds to apply. In other words, the server 230 may determine that though it just established the grade thresholds for tonight, a forecast period for a night after tonight remains without grade thresholds, such as, in the case of Saturday 625 of FIG. 6. The steps of process 700 may be performed monthly, or sooner, depending on how fine-grained a discernment is needed in establishing grade thresholds for each period. Further, some thresholds may be set for a current month, and some thresholds may be set for a later month, in which longer time-horizon nightly forecasts of wind are available. Accordingly, process 700 may iterate again, at step 701, but by advancing the month, and months indexed by, e.g. 1-24, from FIG. 5A.

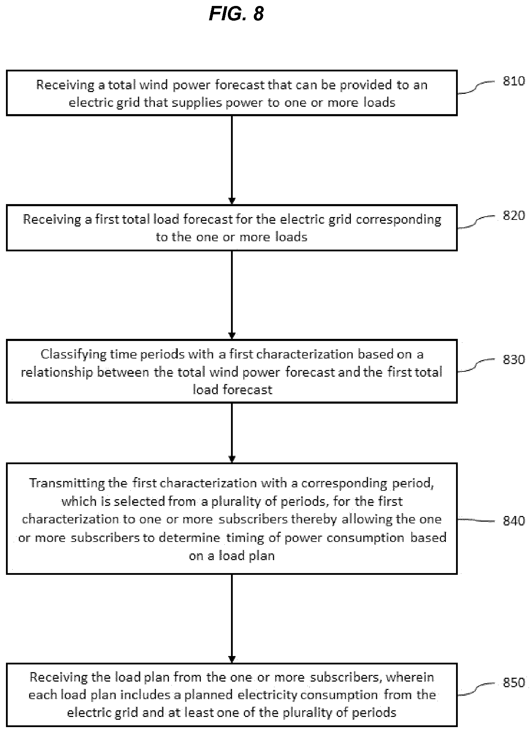

FIG. 8 illustrates a flowchart of an example computer implemented method. At step 810, receiving a total wind power forecast that can be provided to an electric grid that supplies power to one or more loads. At step 820, receiving a first total load forecast for the electric grid corresponding to the one or more loads. At step 830, classifying time periods with a first characterization based on a relationship between the total wind power forecast and the first total load forecast. At step 840, transmitting the first characterization with a corresponding period, which is selected from a plurality of periods, for the first characterization to one or more subscribers thereby allowing the one or more subscribers to determine timing of power consumption based on a load plan. At step 850, receiving the load plan from the one or more subscribers, wherein each load plan includes a planned electricity consumption from the electric grid and at least one of the plurality of periods.

The algorithms disclosed herein, at for example FIGs. 5C and 5D, show threshold calculations with respect to months. However, it is appreciated that periods other than months, e.g. weeks or 10-day intervals, can be used instead. As such, there can be fewer or more threshold calculations than merely at month ends. As such, a finer adjustment to the thresholds expected for each part of the year can be obtained, even for as short a period as a daily period.

In some aspects and embodiments, a power management system includes a server. The server communicates with one or more meters, which meters are configured to receive electricity transmission lines and provide electricity to one or more loads. The server analyzes the data received from the meters. The data includes weather forecasts and total load forecasts. The server includes a machine learning model or artificial intelligence that is training to identify an optimized schedule for energy cost rating based on renewable resources. The model generates the optimized schedule. The model receives feedback for the optimized schedule for energy cost rating, which is determined based on the load forecast and weather forecast The feedback is used to further train the model. The server provides the optimized schedule to users, a determined by the model. The users can control demands for electricity. In accordance with some aspects and embodiments, the users have the options of allowing the model to control, through the user's account/application running on the user's device, and thereby the user's demands for electricity to align with a lowest cost rating based on the optimized schedule. The user can provide feedback to the server, which is used to further train the model. In accordance with some aspects and embodiments, the model is location and running on the server. In accordance with some aspects and embodiments, the model is running at a remote (or central location) relative to the servers and accessed by the server.

In some aspects and embodiments, the techniques described herein relate to a computer implemented method including the steps of: receiving a total wind power forecast that can be provided to an electric grid that supplies power to one or more loads; receiving a first total load forecast for the electric grid corresponding to the one or more loads. It is within the scope of this invention for a consumer to be many actors/users that may make a decision. The first total forecast is collected information wherein the consumers are authorized to make decisions regarding at least one renewable resource. Loads follow generation rather than generation following the load. A meter may be provided. The meter receives information about electricity received and electricity dispensed to consumers.

The computer implemented method includes the steps of classifying time periods with a first characterization based on a relationship between the total wind power forecast and the first total load forecast; transmitting the first characterization with a corresponding period, which is selected from a plurality of periods, for the first characterization to one or more subscribers thereby allowing the one or more subscribers to determine timing of power consumption based on a load plan; and receiving the load plan from the one or more subscribers, wherein each load plan includes a planned electricity consumption from the electric grid and at least one of the plurality of periods. It is within the scope of this invention for the load plan to display data to a user through an electronic device such as, on their smartphone/app. The load plan allows for a user to authorize a level of commitment in the hours that are defined by a user. For example, a load plan is a choice, either by default, and/or by active change to a user interface in which a user indicates the approximate energy that is intended to be obtained during an upcoming period, for example, a night. The load plan may be broad, in that it describes intentions to charge before dawn. The load plan may be specific, in that it may describe the specific hour or minute that a partial charge and/or a full charge is intended to start and/or end.

In some aspects and embodiments, the techniques described herein relate to a computer implemented method, further including adjusting the first total load forecast in response to receiving at least one load plan from the one or more subscribers and using the at least one load plan to update the first total load forecast to form a second total load forecast.

In some aspects and embodiments, the techniques described herein relate to a computer implemented method, further including reclassifying at least one period selected from the plurality of periods in response to adjusting the first total load forecast, to form a second characterization.

In some aspects and embodiments, the techniques described herein relate to a computer implemented method, further including transmitting the second characterization in response to reclassifying the at least one period.

In some aspects and embodiments, the techniques described herein relate to a computer implemented method, wherein the first total load forecast includes a series of load values corresponding to different time periods.

In some aspects and embodiments, the techniques described herein relate to a computer-readable medium including instructions which, when executed by a computer, cause the computer to: receive a total wind power forecast for an electric transmission grid having a plurality of loads connected thereto, wherein the total wind power forecast includes a series of power values corresponding to time periods; receiving a first total load forecast for the electric transmission grid corresponding to the plurality of loads; classifying at least one period in the time periods with a first characterization based on a relationship between the total wind power forecast and the first total load forecast; transmitting the first characterization with the at least one period to a plurality of subscribers; and receiving a load plan from at least one subscriber of the plurality of subscribers, wherein the load plan includes a planned electricity consumption from the electric transmission grid for at least one period of the time periods.

In some aspects and embodiments, the techniques described herein relate to a computer-readable medium, further including adjusting the first total load forecast in response to receiving the load plan and adding the load plan to the first total load forecast to generate a second total load forecast.

In some aspects and embodiments, the techniques described herein relate to a computer-readable medium, further including reclassifying at least one period in the time periods in response to adjusting the first total load forecast, to produce a second characterization.

In some aspects and embodiments, the techniques described herein relate to a computer-readable medium, further including transmitting the second characterization to the plurality of subscribers.

In some aspects and embodiments, the techniques described herein relate to a computer-readable medium, wherein the first characterization is based in part on a seasonal capacity factor of one or more variable energy resources.

In some aspects and embodiments, the techniques described herein relate to a computer-readable medium, wherein the first total load forecast includes load values corresponding to the at least one period.

In some aspects and embodiments, the techniques described herein relate to a power management system, including: a meter configured to receive electricity from one or more sources through one or more transmission lines, wherein the meter is coupled to one or more loads that receive electricity from the meter; and a server in communication with the meter and one or more data storage, wherein the server receives data that includes weather forecast and total load forecast, wherein the server analyzes the data to generate an optimized schedule for energy cost rating thereby allowing users to control demands for electricity at a lowest cost rating based on the optimized schedule.

It is within the scope of this invention for the power management system to have a machine learning model configured to receive an input, being data and/or information, from multiple sources such as from one or more consumers and/or from a meter as training data. The machine learning model may output feedback in real-time to a user through a display of an electronic device.

It is within the scope of this invention for the meter to receive electricity from a time zone that differs from the user reviewing the data from the app on their electronic device. This data may be input into the machine learning model and processed for the user so that the user has data from power grids ahead of the user.

It is within the scope of this invention for the server 230 to have a real-time collection point query from a remote data storage. Further, the server 230 may analyze the data to allow one or more users to have electricity access.

It is within the scope of this invention for the server 230 to receive data from the meter or from a third party. Total load forecast data is received from the meter because it is collected over a period of time. For example, data may be historical data that is retained in a hard drive.

In some aspects and embodiments, the techniques described herein relate to a system, wherein the server 230 generates and sends a pricing signal to a remote device that allows the remote device to select timing of power consumption based on the pricing signal.

In some aspects and embodiments, the techniques described herein relate to a system, wherein the server 230 generates the total load forecast based on retained historic information that is stored at the one or more data storage.

In some aspects and embodiments, the techniques described herein relate to a system, wherein the server 230 generates the total load forecast based on retained historic information that is obtained from an electric transmission grid.

In some aspects and embodiments, the techniques described herein relate to a system, wherein the total load forecast is obtained from a balancing authority.

In some aspects and embodiments, the techniques described herein relate to a system, wherein the total load forecast has a series of power values corresponding to a time series of periods.

In some aspects and embodiments, the techniques described herein relate to a system, wherein the one or more data storage retains a total wind power forecast, the total wind power forecast being wind turbine megawatt output.

In some aspects and embodiments, the techniques described herein relate to a system, wherein the total wind power forecast includes a series of power values corresponding to a time series of periods.

In some aspects and embodiments, the techniques described herein relate to a system, further including a characterization algorithm configured to generate a threshold value having a predetermined percentile to classify periods on a time series with a characterization, the characterization is configured to be displayed on a remote device, the remote device being configured to transmit feedback to the server 230, the predetermined percentile of the characterization is configured to be modified in response to the feedback.

To the extent that the terms "including", "includes", "having", "has", "with", or variants thereof are used in either the detailed description and the claims, such terms are intended to be inclusive in a similar manner to the term "comprising."

The scope of the invention, therefore, is not intended to be limited to the exemplary embodiments and aspects that are shown and described herein. Rather, the scope and spirit of the invention is embodied by the appended claims.

## Claims

1. A computer implemented method comprising the steps of:
receiving a total wind power forecast that can be provided to an electric grid that supplies power to one or more loads;
receiving a first total load forecast for the electric grid corresponding to the one or more loads;
classifying time periods with a first characterization based on a relationship between the total wind power forecast and the first total load forecast;
transmitting the first characterization with a corresponding period, which is selected from a plurality of periods, for the first characterization to one or more subscribers thereby allowing the one or more subscribers to determine timing of power consumption based on a load plan; and
receiving the load plan from the one or more subscribers, wherein each load plan includes a planned electricity consumption from the electric grid and at least one of the plurality of periods.

2. The computer implemented method of claim 1, further comprising adjusting the first total load forecast in response to receiving at least one load plan from the one or more subscribers and using the at least one load plan to update the first total load forecast to form a second total load forecast.

3. The computer implemented method of claim 2, further comprising reclassifying at least one period selected from the plurality of periods in response to adjusting the first total load forecast, to form a second characterization.

4. The computer implemented method of claim 3, further comprising transmitting the second characterization in response to reclassifying the at least one period.

5. The computer implemented method of claim 1, wherein the first total load forecast includes a series of load values corresponding to different time periods.

6. A computer-readable medium comprising instructions which, when executed by a computer, cause the computer to:
receive a total wind power forecast for an electric transmission grid having a plurality of loads connected thereto, wherein the total wind power forecast includes a series of power values corresponding to time periods;
receiving a first total load forecast for the electric transmission grid corresponding to the plurality of loads;
classifying at least one period in the time periods with a first characterization based on a relationship between the total wind power forecast and the first total load forecast;
transmitting the first characterization with the at least one period to a plurality of subscribers; and
receiving a load plan from at least one subscriber of the plurality of subscribers, wherein the load plan includes a planned electricity consumption from the electric transmission grid for at least one period of the time periods.

7. The computer-readable medium of claim 6, further comprising adjusting the first total load forecast in response to receiving the load plan and adding the load plan to the first total load forecast to generate a second total load forecast.

8. The computer-readable medium of claim 7, further comprising reclassifying at least one period in the time periods in response to adjusting the first total load forecast, to produce a second characterization, optionally further comprising transmitting the second characterization to the plurality of subscribers.

9. The computer-readable medium of claim 6, wherein the first characterization is based in part on a seasonal capacity factor of one or more variable energy resources, and/or wherein the first total load forecast includes load values corresponding to the at least one period.

10. A power management system comprising:
a meter configured to receive electricity from one or more sources through one or more transmission lines, wherein the meter is coupled to one or more loads that receive electricity from the meter; and
a server in communication with the meter and one or more data storage, wherein the server receives data that includes weather forecast and total load forecast,
wherein the server analyzes the data to generate an optimized schedule for energy cost rating thereby allowing users to control demands for electricity at a lowest cost rating based on the optimized schedule.

11. The system of claim 10, wherein the server generates and sends a pricing signal to a remote device that allows the remote device to select timing of power consumption based on the pricing signal.

12. The system of claim 10, wherein the server generates the total load forecast based on retained historic information that is stored at the one or more data storage.

13. The system of claim 10, wherein the server generates the total load forecast based on retained historic information that is obtained from an electric transmission grid, and/or wherein the total load forecast is obtained from a balancing authority, and/or wherein the total load forecast has a series of power values corresponding to a time series of periods.

14. The system of claim 10, wherein the one or more data storage retaining a total wind power forecast, the total wind power forecast being wind turbine megawatt output, and preferably wherein the total wind power forecast includes a series of power values corresponding to a time series of periods.

15. The system of claim 10, further comprising a characterization algorithm configured to generate a threshold value having a predetermined percentile to classify periods on a time series with a characterization, the characterization is configured to be displayed on a remote device, the remote device being configured to transmit feedback to the server, the predetermined percentile of the characterization is configured to be modified in response to the feedback.
